# EUROPÄISCHE PATENTSCHRIFT

(11) **EP 0 771 413 B1**
(45) Veröffentlichungstag und Bekanntmachung des Hinweises auf die Patenterteilung: **11.08.1999**
(21) Anmeldenummer: 95924864.2
(22) Anmeldetag: 12.07.1995
(51) Int. Cl.: G01L 3/12

(54) **VERFAHREN ZUM MESSEN VON TORSIONSSPANNUNGEN UND/ODER AXIALSPANNUNGEN AN EINER SICH DREHENDEN WELLE ODER EINEM VERGLEICHBAREN WERKSTÜCKKÖRPER**
METHOD OF MEASURING TORSIONAL STRESSES AND/OR AXIAL STRESSES ON A ROTATING SHAFT OR ON A COMPARABLE WORKPIECE
METHODE DE MESURE DE CONTRAINTES DE TORSION ET/OU DE CONTRAINTES AXIALES SUR UN ARBRE ROTATIF OU SUR UNE PIECE COMPARABLE

(30) Priorität: 20.07.1994 DE 4425503
(43) Veröffentlichungstag der Anmeldung: 07.05.1997
(73) Patentinhaber: Ebi, Günter, 79801 Hohentengen (DE)
(72) Erfinder: Ebi, Günter, 79801 Hohentengen (DE)
(74) Vertreter: Goy, Wolfgang, Dipl.-Phys.
(86) Internationale Anmeldenummer: DE9500934
(87) Internationale Veröffentlichungsnummer: WO9602815

(56) Entgegenhaltungen:
- GB-A- 2 093 992

## Beschreibung

Die Erfindung betrifft ein Verfahren zum Messen von Torsionsspannungen und/oder Axialspannungen an einer sich drehenden Welle oder einem vergleichbaren Werkstückkörper, wobei anschließend daraus die entsprechenden Drehmomente und/oder Biegemomente bestimmt werden.

Zum Überwachen von sich drehenden Wellen (oder einem vergleichbaren sich drehenden Werkstück) kann es erforderlich sein, Torsionsspannungen und/oder Axialspannungen zu messen, um daraus die entsprechenden Drehmomente und/oder Biegemomente zu bestimmen, um so in Erfahrung zu bringen, welchen Belastungen die Welle ausgesetzt ist. Um diese genannten Größen messen zu können, ist es bislang notwendig, Anbauten an die Welle vorzunehmen oder es müssen spezielle Meßwellen zwischengeflanscht werden. Dies ist nur mit einem großen technischen Aufwand möglich. Darüber hinaus sind diese Meßeinrichtungen sehr anfällig. Da darüber hinaus bei den bekannten Meßtechniken mit elektrischen Strömen gearbeitet wird, ist ein Explosionsschutz nicht immer gewährleistet.

In der EP 0 578 422 A2 ist ein Verfahren zum Messen eines Drehmoments beispielsweise an einer Welle offenbart. Das Meßverfahren sieht vor, ein optisches Sensorelement auf dem zu untersuchenden Werkstückkörper anzuordnen. Eine Strahlungsquelle beaufschlagt das Sensorelement mit Licht, während ein zugeordneter Detektor das vom Sensorelement reflektierte Licht empfängt. Sobald auf den Werkstückkörper ein Drehmoment ausgeübt wird, erfährt das Sensorelement eine entsprechende Deformation mit der Folge, daß sich die Polarisation der Strahlung innerhalb des Sensorelements ändert. Zur Ermittlung des Drehmoments werden die Intensität oder die Änderungen in der Spektralverteilung der Strahlung durch den Detektor gemessen.

In der GB 2 125 958 A ist ein weiteres Verfahren zum Messen des Drehmoments an einer Welle offenbart. Zu diesem Zweck sind auf der Welle zwei Reflektoren mit Axialabstand zueinander angeordnet und werden mit Licht bestrahlt. Die von den Reflektoren reflektierten Lichtimpulse werden von entsprechenden Lichtdetektoren empfangen, wobei die Zeitintervalle zwischen den jeweiligen Lichtimpulsen mit dem auf die Welle wirkenden Drehmoment variieren. Somit kann aus diesen gemessenen Zeitintervallen das herrschende Drehmoment mittels eines entsprechenden Mikroprozessors berechnet und angezeigt werden.

In der DE 30 11 700 A1 ist eine Vorrichtung zum Messen des lastabhängigen Drehmoments einer Drehwelle offenbart. Auch bei dieser Meßvorrichtung sind zwei axialbeabstandete Reflektoren auf der Drehwelle angeordnet, welche mit Licht beaufschlagt werden und wobei durch die Messung des reflektierten Lichts die Verdrillung der Drehwelle aufgrund des sich ändernden Winkelabstands der beiden Reflektoren gemessen und daraus das Drehmoment berechnet wird.

Davon ausgehend liegt der Erfindung die **Aufgabe** zugrunde, ein einfacheres Verfahren zum Messen von Torsionsspannungen und/oder Axialspannungen an einer sich drehenden Welle oder einem vergleichbaren Werkstückkörper zu schaffen.

Als technische **Lösung** wird mit der Erfindung vorgeschlagen, daß auf der Oberfläche der Welle wenigstens zwei Reflektor-Paare angeordnet sind, welche bezüglich ihrer Verbindungslinien einen Winkel miteinander einschließen und mit kohärentem Lasericht bestrahlt werden und wobei dabei die reflektierten und miteinander interferierenden Laserstrahl-Paare des jeweiligen Reflektor-Paares bezüglich ihrer Phasendifferenz gemessen werden.

Dadurch ist ein berührungsfreies Meßverfahren von mechanischen Spannungen bei sich drehenden Wellen geschaffen, mittels dem an der sich drehenden Welle Torsionsspannungen und/oder Axialspannungen gemessen werden können, um anschließend daraus die entsprechenden Drehmomente und/oder Biegemomente bestimmen zu können. Die Grundidee besteht dabei darin, in zwei zueinander in einem Winkel stehenden Meßebenen entspechende Laserstrahl-Paare miteinander zur Interferenz zu bringen, um daraus die Phasendifferenzen zu messen. Wird nämlich in die Welle ein Dreh- und/oder Biegemoment eingeleitet, wirken Torsions- und/oder Axialspannungen. Im elastischen Bereich verursachen die Spannungen in der Oberfläche proportionale Scherungen und/oder Dehnungen. Dadurch ändern sich die Abstände zwischen den Reflektoren und damit die Position der Interferenzstreifen. Im vorliegenden Lastfall reicht eine Messung der Verschiebungen zwischen den Reflektoren aus, um Torsions- und/oder Axialspannungen und daraus schließlich Dreh- und/oder Biegemomente zu bestimmen. Grundsätzlich ist es denkbar, mit dem erfindungsgemäßen Meßverfahren gleichzeitig dieTorsionsspannungen sowie die Axialspannungen in der sich drehenden Welle zu messen. Auch ist es denkbar, nur eine der beiden Spannungstypen mittels des erfindungsgemäßen Meßverfahrens zu bestimmen. Dabei wird die Messung der Torsionsspannung den Vorzug haben, da das Drehmoment ohne große Probleme mit akzeptabler Genauigkeit meßbar ist, da sich bei dem Differenzsignal, welches der Drehmomentbestimmung zugrunde liegt, alle Gleichanteile herauskürzen. Bei der Axialspannung mit dem dazugehörigen Biegemoment wird demgegenüber ein Summensignal gebildet mit dem Problem, daß sich Winkelfehler, beispielsweise durch Wellenversatz oder Bearbeitungsungenauigkeit, voll auswirken. Der Vorteil des erfindungsgemäßen Meßverfahrens liegt darin, daß der Sensor berührungsfrei arbeitet. Es sind keine Anbauten an die Welle oder das Zwischenflanschen spezieller Meßwellen erforderlich. Der Sensor kann damit ohne Aufwand auch nachträglich installiert werden. Weiterhin können Dreh- und Biegemoment gleichzeitig, und zwar lokal als Funktion des Umfangswinkels der Welle erfaßt werden. Der Sensor arbeitet weiterhin rein passiv und ist damit vollständig unempfindlich gegen elektromagnetische Strahlung. Darüber hinaus hat der Meßsensor eine kleine Bauweise und kann auch an schwer zugänglichen Stellen montiert werden. Schließlich kann aus dem Auftreten der Interferenzsignale die Drehzahl der Welle gemessen und daraus die Leistung bestimmt werden.

In einer ersten Alternativen können vier Reflektoren vorgesehen sein, wobei zwei der Reflektoren jeweils ein Reflektor-Paar definieren. Diese Variante läßt sich einfach fertigen und ist daher kostengünstig.

In einer zweiten Alternative sind drei Reflektoren vorgesehen, wobei einer der Reflektoren beiden Reflektor-Paaren gemeinsam zugeordnet ist. Dies bringt den Vorteil einerkompakten Bauweise mit sich, da die beiden Reflektor-Paare auf kleinstem Raum untergebracht sind und eine lokale Torsions- und/oder Axialspannung durch die komprimierte Anordnung der Reflektoren punktgenau bestimmt werden kann.

Vorzugsweise sind als Reflektoren Eindrücke in der Welle oder Eindrücke auf einem Träger, der wiederum auf der Welle befestigt ist, vorgesehen. Bei diesen Eindrücken handelt es sich gewissermaßen um Einprägungen, wobei die durch die Eindrücke gebildeten Oberflächen das einfallende Laserlicht reflektieren. Dies stellt eine technisch einfache Möglichkeit zur Schaffung der Reflektoren dar, da dies mit einem entsprechend einfachen Stempel realisiert werden kann, so daß damit hohe Positionsgenauigkeiten möglich sind. Die Eindrücke können direkt auf der Oberfläche der Welle aufgebracht sein. Statt dessen ist es auch denkbar, daß die Reflektoren auf einem Träger angeordnet sind, der wiederum auf der Welle befestigt ist. So können beispielsweise die Eindrücke in einen Ring oder in eine Folie eingepreßt werden, die dann auf der Welle befestigt wird.

In einer ersten Alternativen kann es sich bei den Eindrücken um konkav gewölbte Eindrücke handeln, beispielsweise kugelförmige Eindrücke. Der Vorteil dieser Eindrücke liegt darin, daß sie sehr leicht in die Welle einzubringen sind. Allerdings ist die reflektierte Intensität des Laserlichts relativ gering, so daß eine hohe Verstärkung erforderlich ist, was mit hohen Kosten verbunden ist.

Bei den Eindrücken kann es sich in einer zweiten Alternativen aber auch um regelmäßige pyramidenförmige Eindrücke mit vier Facetten handeln. Diese regelmäßigen vierseitigen Pyramiden stellen eine technisch einfache Möglichkeit dar, um die beiden Laserstrahl-Paare zu reflektieren, wobei jeweils eine Facette als Reflektor für einen Laserstrahl dient. Grundsätzlich werden keine pyramidenförmigen Eindrücke mit vier Facetten benötigt, sondern pro Laserstrahlen-Paar würde auch ein Facetten-Paar ausreichen.

In einer bevorzugten Weiterbildung der beiden Reflektor-Paare verlaufen deren beide Verbindungslinien unter einem Winkel von +/- 45° zur Wellenachse. Somit schließen die beiden Verbindungslinien der beiden Reflektor-Paare einen Winkel von 90° ein, wobei bei der Verwendung von den regelmäßigen pyramidenförmigen Eindrücken deren Außenkanten eine quadratische Form bilden und parallel zu den Verbindungslinien ausgerichtet sind.

Eine weitere Weiterbildung der Reflektoren der jeweiligen Reflektor-Paare schlägt vor, daß diese den gleichen Abstand zueinander aufweisen. In Verbindung mit der 45°-Stellung der Verbindungslinien bezüglich zur Wellenachse ergeben sich damit symmetrische Verhältnisse in den beiden Meßrichtungen und Meßebenen, so daß daraus auf einfache Weise die entsprechenden Dreh- und/oder Biegemomente bestimmt werden können.

Eine weitere Weiterbildung schlägt vor, daß das Laserlicht in Form von einzelnen Laserstrahlen auf die Reflektoren geleitet, insbesondere fokusssiert wird. Insbesondere werden dabei die Laserstrahlen auf die Facetten der Reflektoren fokussiert, sofern es sich bei diesen um die bereits erwähnten regelmäßigen pyramidenförmigen Eindrücke handelt. Der Vorteil der Fokussierung der Laserstrahlen liegt darin, daß während des Meßvorganges, wenn also die Laserstrahlen auf die Reflektoren fallen, die inkohärente Reflexionsstrahlung nur gering ist und somit das Interferenzbild nur wenig beeinträchtigt.

Alternativ hierzu bestrahlt das Laserlicht in Form eines Laserstrahls mit einem Durchmesser die Reflektoren, der größer ist als der Durchmesser der einzelnen Reflektoren oder gar der Gruppe der Reflektoren. Es ist dabei egal, ob es sich bei den Eindrücken um die pyramidenförmigen Eindrücke oder aber um die konkav gewölbten Eindrücke, insbesondere kugelförmigen Eindrücke handelt. Die Grundidee bei dieser Alternativen besteht darin, daß die Reflektoren mit einem relativ dicken Laserstrahl bestrahlt werden. Nur der Teil des Laserlichts, welcher auf die Reflektoren strahlt, wird reflektiert und zur Interferenz gebracht. Nachteilig dabei ist natürlich, daß die zurückgestreute Intensität relativ gering ist, was eine hohe Verstärkung erfordert. Allerdings hat diese Alternative auch Vorteile. Verschiebungen der Welle, beispielsweise bei thermischer Ausdehnung in axialer Richtung, werden toleriert, da die Reflektoren nach wie vor mit dem Laserlicht ausgeleuchtet werden. Im Gegensatz dazu sind bei der Fokussierung der Laserstrahlen die zulässigen Verschiebungen wesentlich kleiner.

Weiterhin wird in einer Weiterbildung vorgeschlagen, daß das Laserlicht entweder kontinuierlich oder aber gepulst dann abgegeben wird, wenn die Reflektoren in den Bereich der einfallenden Laserlichts gelangen. Die gepulste Variante hat den Vorteil, daß nur dann im Interferometer ein Signal erzeugt wird, wenn auch ein Laserstrahl im Bereich der Reflektoren eingefallen und reflektiert worden ist, so daß auch hier der Rauschuntergrund des Meßsignals auf ein Minimum reduziert wird. Zum Pulsen der Laserstrahlen können beispielsweise auf der Welle angebrachte Markierungen dienen, welche den Laserstrahl triggern . Der Pulsbetrieb ist jedoch für einen rauscharmen Betrieb des Meßverfahrens nicht unbedingt notwendig. Auch bei einer kontinuierlichen Laserlichtbestrahlung ist der Rauschuntergrund ausreichend klein für gute Meßergebnisse.

Eine weitere Weiterbildung des erfindungsgemäßen Meßverfahrens schlägt vor, daß um den Umfang der Welle herum mehrere Meßeinheiten angeordnet sind. Die mehrfache Anordnung der Meßeinheiten um den Umfang der Welle herum hat den Vorteil, daß damit ein über den Umfang verteiltes, mittleres Moment bestimmt oder das Moment als Funktion des Umfangswinkels erfaßt werden kann.

Eine weitere Weiterbildung des erfindungsgemäßen Meßverfahrens schlägt vor, daß drei Reflektor-Paare verwendet werden. Die Verwendung eines dritten Strahlenpaares mit einem weiteren Interferometer hat den Vorteil, daß damit der vollständige Spannungszustand an einem Ort bestimmt werden kann.

Schließlich schlägt eine Weiterbildung des erfindungsgemäßen Meßverfahrens vor, daß in den beiden Meßebenen jeweils zwei oder mehr Reflektor-Paare verwendet werden. Somit kann gemäß dieser Weiterbildung in jeder Ebene auch mit zwei Strahlenpaaren gearbeitet werden. Bei der Verwendung von den regelmäßigen, pyramidenförmigen Eindrücken werden dabei vorzugsweise die jeweils gegenüberliegenden Facetten ebenfalls für die Messung herangezogen, da diese gewissermaßen noch "frei" sind. Diese Weiterbildung macht zwar die Verwendung von weiteren Interferometern erforderlich, der Vorteil liegt jedoch in dem Ausgleich von gewissen Winkelfehlern.

Ein Ausführungsbeispiel eines erfindungsgemäßen Sensors zum Messen von Torsionsspannungen und/oder Axialspannungen an einer sich drehenden Welle zum anschließenden Bestimmen der entsprechenden Drehmomente und/oder Biegemomente wird nachfolgend anhand der Zeichnungen beschrieben. In diesen zeigt:
- Fig. 1: eine Seitenansicht der Welle mit drei darauf angeordneten Reflektoren in Form von pyramidenförmigen Eindrücken;
- Fig.2: eine Darstellung der Meßanordnung senkrecht zur Wellenachse;
- Fig. 3: den Strahlenverlauf in Fig. 2, jedoch in größerem Maßstab zur Verdeutlichung von Einzelheiten;
- Fig. 4: eine schematische Darstellung entsprechend der in Fig. 3, jedoch statt der pyramidenförmigen Eindrücke mit kugelförmigen Eindrücken für die Reflektoren;
- Fig. 5: eine modifizierte Anordnung der Reflektoren in einer Darstellung entsprechend der in Fig. 1.

Auf einer sich drehenden Welle 1 befinden sich drei Reflektoren 2,3,4. Diese sind jeweils als Eindrücke in Form einer regelmäßigen vierseitigen Pyramide auf der Oberfläche der Welle 1 ausgebildet. Die Eindrücke dienen der Reflexion von einfallendem Laserlicht, das damit zur Interferenz gebracht wird. Die Reflektoren 2,3,4 bilden zwei Reflektor-Paare 2,3 bzw. 2,4, wobei die Reflektoren 2,3,4 eines jeden Reflektor-Paares 2,3 bzw. 2,4 den gleichen Abstand zueinander aufweisen und auf den Verbindungslinien L1 sowie L2 liegen, welche unter einem Winkel von +/- 45° zur Wellenachse verlaufen. Wird in die Welle 1 ein Dreh- und Biegemoment eingeleitet, wirken auf die Welle 1 Torsions- und Axialspannungen. Im elastischen Bereich verursachen die Spannungen in der Oberfläche proportionale Scherungen und Dehnungen. Dadurch ändern sich die Abstände zwischen den Reflektoren 2,3,4 und damit die Position der Interferenzstreifen. Im vorliegenden Lastfall reicht eine Messung der Verschiebungen zwischen den Reflektor-Paaren 2,3 und 2,4 aus, um sowohl Torsins- als auch Axialspannungen und daraus schließlich Dreh- und Biegemoment zu bestimmen. Selbstverständlich ist es auch denkbar und möglich, nur entweder die Torsionsspannung oder die Axialspannung zu messen, wobei die Messung der Torsionsspannung gegenüber der Axialspannung einfacher ist, da sich bei dem zu bildenden Differenzsignal alle Gleichanteile rauskürzen.

Gemäß dem Superpositionsprinzip entspricht die zusammengesetzte Belastung der Summe aus einer reinen Torsions- und einer Biegebelastung. Bei reinerTorsionsbelastung verlaufen die Hauptdehnungen unter einem Winkel von +/- 45° zur Wellenachse, haben den gleichen Betrag und entgegengesetztes Vorzeichen. Bei reiner Biegebelastung stimmen unter +/- 45° die Dehnungen sowohl im Betrag als auch im Vorzeichen überein. Damit ergibt sich aus der Summe der gemessenen Verschiebungen in + 45°- und - 45°-Richtung die Dehnung aufgrund der Biegung, da sich die Torsionshauptdehnungen aufheben. Umgekehrt ergibt sich aus der Differenz die Torsionshauptdehnung, da sich jetzt die Biegedehnungen aufheben.

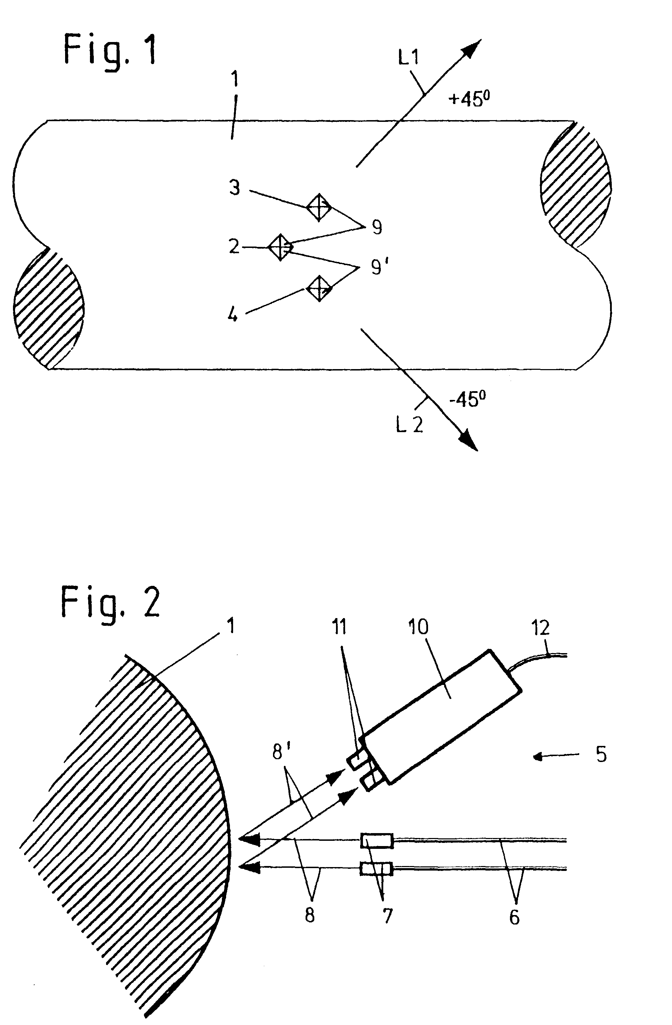

Zur Messung der Verschiebung ist den Reflektor-Paaren 2,3 sowie 2,4 jeweils in geringem Abstand von der Oberfläche der Welle 1 eine Sensoranordnung 5 zugeordnet, welche in Fig. 2 dargestellt ist. Jede dieser beiden Sensoranordnungen 5 besteht aus zwei Lichtwellenleitern 6, über die kohärentes Laserlicht von einer entfernten Laserquelle herangeführt wird. Jeder Lichtwellenleiter 6 ist mit einer Linse 7 abgeschlossen, um die einfallenden Laserstrahlen 8 auf die Facetten 9 der Reflektoren 2,3 und die Facetten 9' der Reflektoren 2,4 zu fokussieren. Weiterhin besteht jede Sensoranordnung 5 aus einem Interferometer 10, in das die beiden reflektierten Laserstrahlen 8' ebenfalls über die Linsen 11 eingespeist und zur Interferenz gebracht werden. An den Ausgängen des Interferometers 10 stehen Intensitätssignale zur Verfügung, die ebenfalls über Lichtwellenleiter 12 einer elektronischen Schaltung zur Auswertung zugeführt werden.

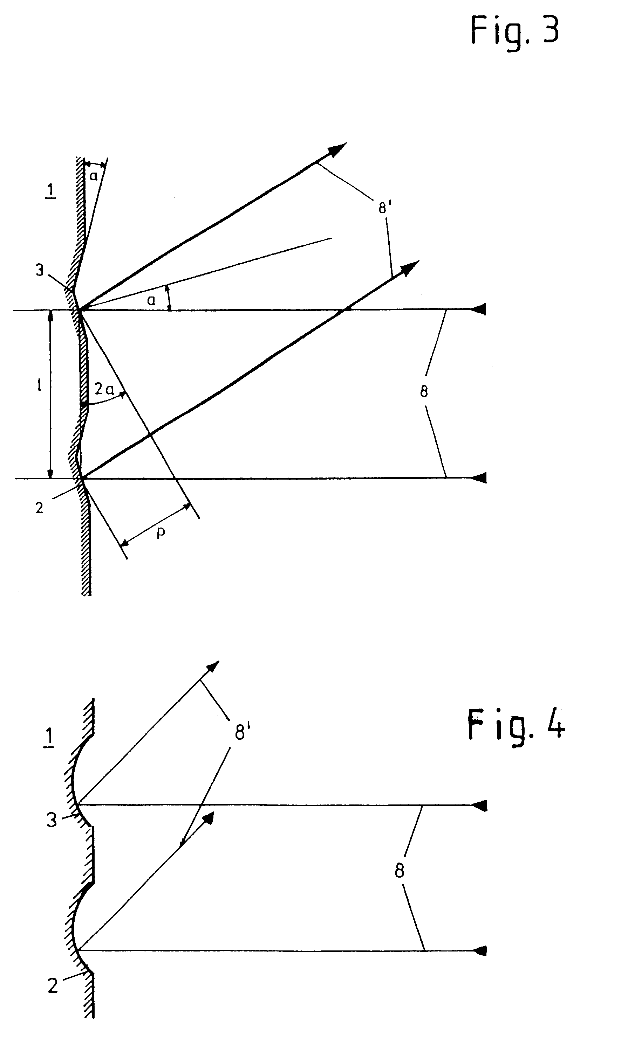

Die Außenkanten der als Eindrücke ausgebildeten Reflektoren 2,3,4 bilden eine quadratische Form und sind parallel zu den Verbindungslinien L1 und L2 ausgerichtet. Die dreieckförmigen Facetten der Pyramiden sind um einen Winkel a gegen die Oberfläche der Welle 1 geneigt. Fällt man das Lot auf die Facetten 9,9' der Reflektoren 2,3,4, dann liegen die lotrechten Geraden in Ebenen, die sich unter einem Winkel von 90° kreuzen. Fig. 3 zeigt die über den Reflektoren 2,3 aufgespannte Ebene. Die einfallenden und reflektierten Laserstrahlen 8,8' schließen mit den lotrechten Geraden ebenfalls einen Winkel a ein. Daraus resultiert zwischen den beiden reflektierten Laserstrahlen 8' ein optischer Gangunterschied p, der proportional zum Abstand I der Reflektoren 2,3 und proportional zum Sinus des doppelten Winkels a ist. Bei der mechanischen Belastung der Welle ändert sich der Abstand I zwischen den Reflektoren 2,3 und damit der optische Gangunterschied p zwischen den reflektierten Laserstrahlen 8'. Wird die Änderung des Gangunterschiedes p auf die Wellenlänge des Laserlichts bezogen und mit 2π multipliziert, ergibt sich ein Phasenunterschied dp, der sich proportional zur Dehnung zwischen den Reflektoren 2,3 ändert. Die phasenverschobenen Laserstrahlen 8' erzeugen im Interferometer 10 periodische Intensitätssignale mit der Periodenlänge entsprechend der Wellenlänge des Laserlichts, aus denen mit Hilfe einer nachfolgenden elektronischen Schaltung der Phasenunterschied dp ermittelt wird.

Wenn sich die Welle 1 dreht, überstreichen die vier einfallenden Laserstrahlen 8 die Oberfläche der Welle 1 in Umfangsrichtung, und zwar genau an der Position, an der sich die Facetten 9,9' befinden. Da durch die Fokussierung der Strahldurchmesser deutlich kleiner ist als die Abmessung einer Facette 9,9', gibt es ein Zeitintervall, in dem die Laserstrahlen 8 von den Facetten 9,9' reflektiert werden. Nur in diesem Zeitintervall treffen aufgrund des Neigungswinkels a der Facetten 9,9' und der Lage der Sensoranordnung 5 die reflektierten Laserstrahlen 8' mit dem Phasenunterschied dp auf die Linsen 11 des Interferometers 10. Außerhalb dieses Zeitintervalls trifft nur inkohärente Strahlung auf das Interferometer 10, so daß sich kein periodisches Intensitätssignal ausbilden kann. Die Meßzeit zur Erfassung des Phasenunterschieds ist damit durch das beschriebene Zeitintervall genau vorgegeben.

Die besondere Vorteile des erfindungsgemäßen Meßverfahrens und der dazugehörigen Meßvorrichtung sind zunächst, daß keine Anbauten an die Welle 1 oder das Zwischenflanschen spezieller Meßwellen erforderlich ist, wie dies bei den bekannten Meßverfahren der Fall ist. Der Sensor kann damit ohne Aufwand nachträglich installiert werden. Weiterhin arbeitet der Sensor berührungsfrei. Die Dreh- und Biegemomente können gleichzeitig sowie lokal als Funktion des Umfangswinkels der Welle 1 erfaßt werden. Der Sensor arbeitet rein passiv und ist damit vollständig unempfindlich gegen elektromagnetische Strahlung. Schließlich hat der Sensor eine kleine Bauweise und kann auch an schwer zugänglichen Stellen montiert werden.

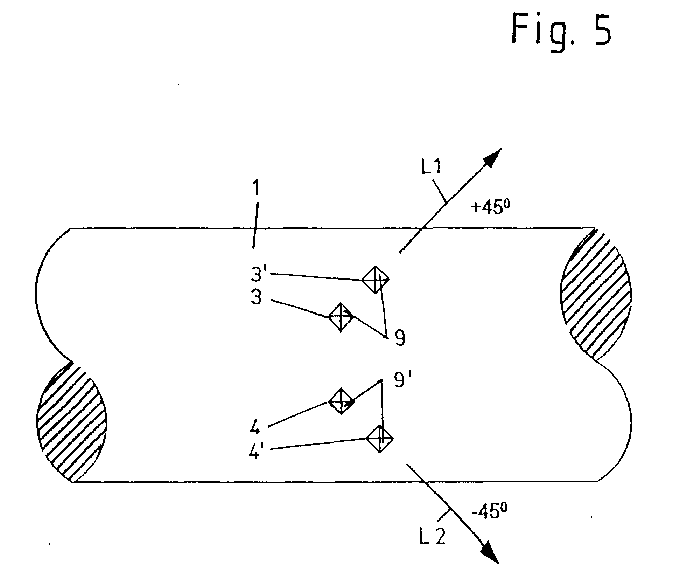

Gegenüber dem in den Fig. 1 bis 3 dargestellten Ausführungsbeispiel der erfindungsgemäßen Meßvorrichtung kann diese in diversen Punkten modifiziert werden, wie dies in den Fig. 4 und 5 dargestellt ist. Während in Fig. 3 die Reflektoren 2,3 als regelmäßige, pyramidenförmige Eindrücke zu erkennen sind, sind bei der alternativen Ausführungsform in Fig. 4 die Eindrücke als kugelförmige Eindrücke ausgebildet, welche das eingestrahlte Laserlicht entsprechend reflektieren. Weiterhin ist in Fig. 5 erkennbar, daß statt drei Reflektoren 2,3,4 vier Reflektoren 3,3', 4,4' vorgesehen sind mit zwei daraus definierten Reflektor-Paaren 3,3' sowie 4,4'. Das Grundmeßprinzip ist jedoch identisch dem der Reflektoranordnung in Fig. 1.

In den Zeichnungen nicht dargestellt ist die Möglichkeit, das Interferometer 10 nicht in unmittelbarer Nähe zur Welle 1 anzuordnen. So ist es auch denkbar, das Interferometer 10 an einem anderen Ort anzuordnen, wobei dann das Laserlicht über Lichtwellenleiter dem Interferometer 10 zugeführt wird. Weiterhin kann die Anordnung mit den Reflektoren 2,3,4 bzw. 3,3', 4,4' mehrfach am Umfang der Welle 1 wiederholt werden, beispielsweise um ein über den Umfang verteiltes, mittleres Moment zu bestimmen oder das Moment als Funktion des Umfangswinkels zu erfassen. Weiterhin ist es auch möglich, den vollständigen Spannungszustand der Welle 1 an einem Ort zu bestimmen, wenn man ein drittes Strahlenpaar mit einem weiteren Interferometer benutzt. In dem dargestellten Ausführungsbeispiel werden pyramidenförmige Eindrücke mit jeweils vier Facetten verwendet. Statt dessen reicht pro Strahlenpaar grundsätzlich auch ein einziges Facettenpaar aus. Weiterhin können die Eindrücke auch in einen Ring oder in eine Folie eingepreßt werden, die dann auf der Welle 1 befestigt wird. Weiterhin kann in jeder Ebene (also in Richtung der beiden Verbindungslinien L1 und L2) auch mit zwei Strahlenpaaren gearbeitet werden. Dazu werden die jeweils gegenüberliegenden Facetten zu den bereits herangezogenen Facetten 9,9' ebenfalls für die Messung herangezogen. Das würde natürlich auch einen weiteren Interferometer erfordern. Vorteil dieser Erweiterung wäre jedoch der Ausgleich von gewissen Winkelfehlern. Schließlich ist es nicht notwendig, die Laserstrahlen 8 auf die Reflektoren zu fokussieren, sondern es ist auch denkbar, daß der Laserstrahl 8 einen Durchmesser aufweist, welcher größer ist als der Durchmesser des einzelnen Reflektors oder gar des Durchmessers der Gruppe der Reflektoren. Verschiebungen der Welle 1 beispielsweise bei thermischer Ausdehnung in axialer Richtung können dadurch ausgeglichen werden, da die Reflektoren immer noch ausgeleuchtet werden. Im Fall der Fokussierung der Laserstrahlen 8 sind zulässige Verschiebungen der Welle 1 wesentlich kleiner. Auch können die Laserstrahlen 8 entweder gepulst oder im Dauerstrich gefahren werden.

### Bezugszeichenliste

- 1: Welle
- 2: Reflektor
- 3: Reflektor
- 4: Reflektor
- 5: Sensoranordnung
- 6: Lichtwellenleiter
- 7: Linse
- 8,8': Laserstrahl
- 9,9': Facette
- 10: Interferometer
- 11: Linse
- 12: Lichtwellenleiter

- L1: Verbindungslinie
- L2: Verbindungslinie

- a: Winkel
- I: Abstand
- p: optischer Gangunterschied

## Patentansprüche

1. Verfahren zum Messen von Torsionsspannungen und/oder Axialspannungen an einer sich drehenden Welle (1) oder einem vergleichbaren Werkstückkörper, wobei anschließend daraus die entsprechenden Drehmomente und/oder Biegemomente bestimmt werden,
**dadurch gekennzeichnet,**
daß auf der Oberfläche der Welle (1) wenigstens zwei Reflektor-Paare (2,3;2,4 bzw. 3,3';4,4') angeordnet sind, welche bezüglich ihrer Verbindungslinien (L1,L2) einen Winkel miteinander einschließen und mit kohärentem Laserlicht bestrahlt werden und wobei dabei die reflektierten und miteinander interferierenden Laserstrahl-Paare (8') des jeweiligen Reflektor-Paares (2,3;2,4 bzw. 3,3';4,4') bezüglich ihrer Phasendifferenz gemessen werden.

2. Verfahren nach Anspruch 1,
dadurch gekennzeichnet,
daß vier Reflektoren (3,3',4,4') vorgesehen sind, wobei zwei der Reflektoren (3,3',4,4') jeweils ein Reflektor-Paar (3,3';4,4') definieren.

3. Verfahren nach Anspruch 1,
dadurch gekennzeichnet,
daß drei Reflektoren (2,3,4) vorgesehen sind, wobei einer der Reflektoren (2) beiden Reflektor-Paaren (2,3;2,4) gemeinsam zugeordnet ist.

4. Verfahren nach einem der Ansprüche 1 bis 3,
dadurch gekennzeichnet,
daß als Reflektoren (2,3,4 bzw. 3,3';4,4') Eindrücke in der Welle (1) oder Eindrücke auf einem Träger, der wiederum auf der Welle (1) befestigt ist, vorgesehen sind.

5. Verfahren nach Anspruch 4,
dadurch gekennzeichnet,
daß es sich bei den Eindrücken um konkav gewölbte Eindrücke handelt.

6. Verfahren nach Anspruch 4,
dadurch gekennzeichnet,
daß es sich bei den Eindrücken um regelmäßige pyramidenförmige Eindrücke mit vier Facetten (9,9') handelt.

7. Verfahren nach einem der Ansprüche 1 bis 6,
dadurch gekennzeichnet,
daß die beiden Verbindungslinien (L1,L2) der beiden Reflektor-Paare (2,3;2,4 bzw. 3,3';4,4') unter einem Winkel von +/- 45° zur Wellenachse verlaufen.

8. Verfahren nach einem der Ansprüche 1 bis 7,
dadurch gekennzeichnet,
daß die Reflektoren (2,3,4 bzw. 3,3';4,4') der jeweiligen Reflektor-Paare (2,3;2,4 bzw. 3,3';4,4') den gleichen Abstand zueinander aufweisen.

9. Verfahren nach einem der Ansprüche 1 bis 8,
dadurch gekennzeichnet,
daß das Laserlicht in Form von einzelnen Laserstrahlen (8) auf die Reflektoren (2,3,4) geleitet, insbesondere fokussiert wird.

10. Verfahren nach einem der Ansprüche 1 bis 8,
dadurch gekennzeichnet,
daß das Laserlicht in Form eines Laserstrahls mit einem Durchmesser die Reflektoren (2,3,4 bzw. 3,3';4,4') bestrahlt, der größer ist als der Durchmesser der einzelnen Reflektoren (2,3,4, bzw. 3,3';4,4') oder gar der Gruppe der Reflektoren (2,3,4 bzw. 3,3';4,4').

11. Verfahren nach einem der Ansprüche 1 bis 10,
dadurch gekennzeichnet,
daß das Laserlicht entweder kontinuierlich oder aber gepulst dann abgegeben wird, wenn die Reflektoren (2,3,4 bzw. 3,3',4,4') in den Bereich des einfallenden Laserlichts gelangen.

12. Verfahren nach einem der Ansprüche 1 bis 11,
dadurch gekennzeichnet,
daß um den Umfang der Welle (1) herum mehrere Meßeinheiten angeordnet sind.

13. Verfahren nach einem der Ansprüche 1 bis 12,
dadurch gekennzeichnet,
daß drei Reflektor-Paare verwendet werden.

14. Verfahren nach einem der Ansprüche 1 bis 13,
dadurch gekennzeichnet,
daß in den beiden Meßebenen jeweils zwei oder mehr Reflektor-Paare verwendet werden.

## Claims

1. Process for measuring torsion stresses and/or axial stresses on a rotating shaft (1) or a comparable workpiece body, where from this the corresponding torque and/or moment of flexion is determined,
characterised in that
on the surface of the shaft (1) are arranged at least two reflector pairs (2,3; 2,4 or 3,3'; 4,4') which in their connecting lines (L1, L2) enclose an angle with each other and are irradiated with coherent laser light and where the reflected and mutually interfering laser beam pairs (8') of the reflector pairs concerned (2,3; 2,4 or 3,3'; 4,4') are measured for their phase difference.

2. Process according to claim 1,
characterised in that
four reflectors (3,3', 4,4') are provided, where two of the reflectors (3,3', 4,4') each define a reflector pair (3,3'; 4,4').

3. Process according to claim 1,
characterised in that
three reflectors (2, 3, 4) are provided, where one of the reflectors (2) is allocated in common to both reflector pairs (2,3; 2,4).

4. Process according to any of claims 1 to 3,
characterised in that
impressions in the shaft (1) or impressions on a carrier which is in turn attached to the shaft (1) are provided as reflectors (2, 3, 4 or 3,3'; 4,4') .

5. Process according to claim 4,
characterised in that
the impressions are concave curved impressions.

6. Process according to claim 4,
characterised in that
the impressions are regular pyramidal impressions with four facets (9, 9').

7. Process according to any of claims 1 to 6,
characterised in that
the two connecting lines (L1, L2) of the two reflectors pairs (2,3; 2,4 and 3,3'; 4,4') run at an angle of +/- 45° to the shaft axis.

8. Process according to any of claims 1 to 7,
characterised in that
the reflectors (2, 3, 4 or 3,3'; 4,4') of the reflector pair concerned (2,3; 2,4 or 3,3'; 4,4') have the same separation from each other.

9. Process according to any of claims 1 to 8,
characterised in that
the laser light is guided onto the reflectors (2, 3, 4), in particular focused, in the form of individual laser beams (8).

10. Process according to any of claims 1 to 8,
characterised in that
the laser light irradiates the reflectors (2, 3, 4 or 3,3'; 4,4') in the form of a laser beam with a diameter which is greater than the diameter of the individual reflectors (2, 3, 4 or 3,3'; 4,4') or the group of reflectors (2, 3, 4 or 3,3'; 4,4').

11. Process according to any of claims 1 to 10,
characterised in that
the laser light is emitted either continuously or pulsed when the reflectors (2, 3, 4 or 3,3'; 4,4') enter the area of the incident laser light.

12. Process according to any of claims 1 to 11,
characterised in that
around the periphery of the shaft (1) are arranged several measurement units.

13. Process according to any of claims 1 to 12,
characterised in that
three reflector pairs are used.

14. Process according to any of claims 1 to 13,
characterised in that
two or more reflector pairs are used in each of the two measurement planes.

## Revendications

1. Méthode de mesure de contraintes de torsion et/ou de contraintes axiales sur un arbre en rotation (1) ou sur une pièce comparable, à partir de laquelle les couples de torsion et/ou les couples de flexion correspondants sont ensuite déterminés
caractérisée en ce que,
au moins deux paires de réflecteurs (2, 3 ; 2, 4 ou 3, 3'; 4, 4') sont disposées sur la surface de l'arbre (1), qui, relativement à leurs lignes de jonction (L1, L2) englobent mutuellement un angle et sont irradiées avec une lumière laser cohérente, les paires de rayons laser (8') ce faisant réfléchies et interférant réciproquement de la paire de réflecteurs respective (2, 3 ; 2, 4 ou 3, 3'; 4, 4') étant mesurées relativement à leur différence de phase.

2. Méthode selon la revendication 1, caractérisée en ce que quatre réflecteurs (3, 3', 4, 4') sont prévus, deux des réflecteurs (3, 3', 4, 4') définissant respectivement une paire de réflecteurs (3, 3'; 4, 4').

3. Méthode selon la revendication 1, caractérisée en ce que trois réflecteurs (2, 3, 4) sont prévus, l'un des réflecteurs (2) étant affecté en commun aux deux paires de réflecteurs (2, 3 ; 2, 4).

4. Méthode selon l'une des revendications 1 à 3, caractérisée en ce que des empreintes sont prévues en tant que réflecteurs (2, 3, 4 ou 3, 3 ; 4, 4') dans l'arbre (1) ou sur un support, lequel, en revanche, est fixé à l'arbre (1).

5. Méthode selon la revendication 4, caractérisée en ce que les empreintes se présentent sous forme d'empreintes bombées de façon concave.

6. Méthode selon la revendication 4, caractérisée en ce que les empreintes se présentent sous forme d'empreintes pyramidales régulières comportant quatre facettes (9, 9').

7. Méthode selon l'une des revendications 1 à 6, caractérisée en ce que les deux lignes de jonction (L1, L2) des deux paires de réflecteurs (2, 3 ; 2, 4 ou 3, 3'; 4, 4') s'étendent selon un angle de ± 45 ° par rapport à l'axe de l'arbre.

8. Méthode selon l'une des revendications 1 à 7, caractérisée en ce que les réflecteurs (2, 3, 4 ou 3, 3'; 4, 4') des paires de réflecteurs respectives (2, 3 ; 2, 4 ou 3, 3'; 4, 4') présentent entre eux le même espacement.

9. Méthode selon l'une des revendications 1 à 8, caractérisée en ce que la lumière laser qui est dirigée sur les réflecteurs (2, 3, 4) sous forme de rayons laser individuels (8) est particulièrement concentrée.

10. Méthode selon l'une des revendications 1 à 8, caractérisée en ce que la lumière laser irradie les réflecteurs (2, 3, 4 ou 3, 3' ; 4, 4') sous forme d'un rayon laser dont le diamètre est supérieur au diamètre des réflecteurs individuels (2, 3, 4 ou 3, 3'; 4, 4') ou même du groupe de réflecteurs (2, 3, 4 ou 3, 3'; 4, 4').

11. Méthode selon l'une des revendications 1 à 10, caractérisée en ce que la lumière laser est délivrée soit en continu, soit cependant en régime pulsé lorsque les réflecteurs (2, 3, 4 ou 3, 3'; 4, 4') parviennent à la zone d'impact de la lumière laser.

12. Méthode selon l'une des revendications 1 à 11, caractérisée en ce que plusieurs unités de mesure sont disposées tout autour de la circonférence de l'arbre (1).

13. Méthode selon l'une des revendications 1 à 12, caractérisée en ce que l'on utilise trois paires de réflecteurs.

14. Méthode selon l'une des revendications 1 à 13, caractérisée en ce que l'on utilise dans les deux plans de mesure chaque fois deux paires de réflecteurs ou plus.
